# EUROPEAN PATENT APPLICATION

(11) **EP 4 414 150 A1**
(43) Date of publication of application: **14.08.2024**
(21) Application number: 24151929.7
(22) Date of filing: 15.01.2024
(51) Int. Cl.: B29B 11/16

(54) **PROCESSING OF COMPOSITES WITH PARTIAL PLIES**

(30) Priority: 09.02.2023 US 202318166926
(71) Applicant: The Boeing Company, Arlington, VA 22202 (US)
(72) Inventor: Spalding, John F., Arlington, 22202 (US); Matsen, Marc R., Arlington, 22202 (US); Janda, Gwendolyn Marie, Arlington, 22202 (US)
(74) Representative: Arnold & Siedsma

(57) **Abstract**

Methods of forming a composite structure from a preform (400) with a vent (411) are presented. A preform comprises a plurality of sets of full length plies (406), a plurality of sets of partial plies ((408) alternating with the plurality of sets of full length plies, and a vent extending through the plurality of sets of partial plies.

## Description

### BACKGROUND INFORMATION

### 1. Field:

The present disclosure relates generally to processing composite materials and more specifically to air extraction during composite processing.

### 2. Background:

Composite materials are strong, light-weight materials created by combining two or more functional components. For example, a composite material may include reinforcing fibers bound in polymer resin matrix. The fibers can take the form of a unidirectional tape, woven cloth or fabric, or a braid.

In manufacturing composite structures, layers of composite material are typically laid up on a tool. The layers may be comprised of fibers in sheets. In some cases, resin may be infused or pre-impregnated into the sheets. These types of sheets are commonly referred to as prepreg.

Composite structures can have added localized reinforcement plies. Localized reinforcement (doubler) plies are partial plies that are interleaved through the stack of continuous plies. During heating of a composite structure, entrapped gas is released from the composite layup. However, gas can become trapped within the partial plies.

Therefore, it would be desirable to have a method and apparatus that takes into account at least some of the issues discussed above, as well as other possible issues. For example, it would be desirable to have a method and apparatus that allows for removal of entrapped gas from partial plies within a composite preform.

### SUMMARY

An example of the present disclosure provides a preform. The preform comprises a plurality of sets of full length plies, a plurality of sets of partial plies alternating with the plurality of sets of full length plies, and a vent extending through the plurality of sets of partial plies.

Optionally, the vent extends through an entirety of the preform.

Optionally, the vent is a cut into the preform.

Optionally, the preform further comprises a plug positioned within the vent.

Optionally, the plug comprises a material configured to maintain its geometry during debulk and cure of the preform.

Optionally, the vent is one of a number of vents formed by pressing a plurality of pins through the plurality of sets of partial plies. Preferably, the number of vents comprises locally displaced fibers within the plurality of sets of partial plies.

Optionally, the vent comprises a number of vent holes within the plurality of sets of partial plies and at least a portion of the plurality of sets of full length plies stacked vertically.

Another example of the present disclosure provides a method of performing composite manufacturing. A release film comprising a number of perforations is positioned over a preform comprising a vent extending through a plurality of sets of partial plies of the preform such that the perforations are adjacent the vent. Debulk is performed on the preform such that at least one of air, volatiles, or resin is drawn from the plurality of sets of partial plies through the vent and the perforations of the release film.

Optionally, the at least one of air, volatiles, or resin travel along a plurality of air paths formed by each set of partial plies of the plurality of sets of partial plies and the vent to exit the preform during the debulk.

Optionally, the method further comprises positioning a plug into the vent prior to performing debulk.

Optionally, the method further comprises curing the preform to form a laminate after performing the debulk, and cutting the vent out of the laminate.

Optionally, the method further comprises forming a plurality of plies including a plurality of sets of full length plies and the plurality of sets of partial plies, each partial ply of the plurality of sets of partial plies comprising a vent hole, and laying up the plurality of plies on a tool to form the preform, each vent hole stacked vertically to form the vent in the preform. Preferably, laying up the plurality of plies comprises alternating sets of partial plies and sets of full length plies.

Optionally, the method further comprises forming a plurality of plies including a plurality of sets of full length plies and the plurality of sets of partial plies, laying up the plurality of plies on a tool to form the preform, and cutting the vent into the preform through the plurality of sets of partial plies and at least one full length ply of the plurality of sets of full length plies.

Optionally, the method further comprises forming a plurality of plies including a plurality of sets of full length plies and the plurality of sets of partial plies, laying up the plurality of plies on a tool to form the preform, pressing a plurality of pins through the plurality of sets of partial plies to form a number of vents including the vent. Preferably, pressing the plurality of pins locally displaces fibers of the plurality of sets of partial plies to create vent paths.

Yet another example of the present disclosure provides a method of forming a composite structure. A preform having a number of vents and a plurality of plies is formed, the plurality of plies including a plurality of sets of full length plies and a plurality of sets of partial plies, the number of vents extending through the plurality of sets of partial plies. Debulk is performed on the preform such that at least one of air, volatiles, or resin are drawn from the plurality of sets of partial plies through the number of vents and out of the preform.

Optionally, forming the preform having the number of vents comprises forming the plurality of plies including the plurality of sets of full length plies and the plurality of sets of partial plies, the plurality of sets of partial plies comprising a number of vent holes, and laying up the plurality of plies on a tool to form the preform, the number of vent holes stacked vertically to form the number of vents in the preform. Preferably, laying up the plurality of plies comprises alternating sets of partial plies and sets of full length plies.

Optionally, forming the preform having the number of vents comprises forming the plurality of plies including the plurality of sets of full length plies and the plurality of sets of partial plies, laying up the plurality of plies on a tool to form the preform, and cutting the number of vents into the preform through the plurality of sets of partial plies and at least one full length ply of the plurality of sets of full length plies.

Optionally, forming the preform having the number of vents comprises forming the plurality of plies including the plurality of sets of full length plies and the plurality of sets of partial plies, laying up the plurality of plies on a tool to form the preform, and pressing a plurality of pins through the plurality of sets of partial plies to form the number of vents.

Optionally, the number of vents extends through an entirety of the preform.

Optionally, the number of vents extends partially through the preform.

Optionally, the method further comprises positioning a release film over the preform prior to performing the debulk, the release film comprising a number of perforations adjacent the number of vents.

Optionally, the method further comprises positioning a plug into a vent of the number of vents prior to performing debulk.

Optionally, the method further comprises curing the preform to form a laminate, and cutting the number of vents out of the laminate.

A yet further example of the present disclosure provides a method of forming a composite structure. Vacuum is applied to a preform having a vent and a plurality of sets of partial plies, the vent extending through the plurality of sets of partial plies. At least one of air, volatiles, or resin is drawn out of the plurality of sets of partial plies through the vent and into a breather.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a top view of a layup of a composite preform in accordance with an illustrative example;
**Figure 4** is an illustration of a cross-sectional view of a layup of a composite preform in accordance with an illustrative example;
**Figure 5** is an illustration of a cross-sectional view of a layup of a composite preform in accordance with an illustrative example;
**Figure 6** is an illustration of a cross-sectional view of a layup of a composite preform in accordance with an illustrative example;
**Figure 7** is an illustration of a cross-sectional view of a layup of a composite preform in accordance with an illustrative example;
**Figure 8** is an illustration of a cross-sectional view of a layup of a composite preform with vacuum bagging materials in accordance with an illustrative example;
**Figure 9** is an illustration of a cross-sectional view of a layup of a composite preform with a plurality of pins in accordance with an illustrative example;
**Figure 10** is a flowchart of a method of forming a composite structure in accordance with an illustrative example;
**Figure 11** is a flowchart of a method of forming a composite structure in accordance with an illustrative example;
**Figure 12** is a flowchart of a method of forming a composite structure in accordance with an illustrative example;
**Figure 13** is a flowchart of a method of forming a composite structure in accordance with an illustrative example;
**Figure 14** is a flowchart of a method of forming a composite structure in accordance with an illustrative example;
**Figure 15** is a flowchart of a method of forming a composite structure in accordance with an illustrative example;
**Figure 16** is an illustration of an aircraft manufacturing and service method in a form of a block diagram in accordance with an illustrative example; and
**Figure 17** is an illustration of an aircraft in a form of a block diagram in which an illustrative example may be implemented.

### DETAILED DESCRIPTION

The illustrative examples recognize and take into account one or more different considerations. For example, the illustrative examples recognize and take into account that one advantage of composite structures is that it is easy to add localized reinforcement plies to the structure. These local reinforcements are used to strengthen the structure where through holes are used for windows, systems pass throughs, access holes, fasteners, and other features in subsequent manufacturing operations. The illustrative examples recognize and take into account that the localized doubler plies are interleaved through the stack of continuous plies.

Autoclaves are large and expensive tools used to provide heat and pressure to cure composite materials. Alternative curing methods have been developed that use faster or less expensive methods and tooling. Some of these alternative curing methods include vacuum bag only and double vacuum debulk processes.

The illustrative examples recognize and take into account that Vacuum Bag Only (VBO) and Double Vacuum Debulk (DVD) processed laminates can have localized porosity that coincides with doubler plies within the panel acreage that do not extend to the edge of the laminate. The illustrative examples recognize and take into account that these doubler plies, or pad ups, are engineered skin gauge increases to compensate for systems passthroughs, or fasteners patterns, that will be machined or drilled in future stages of assembly. The size and thickness of the pad up will vary with the specific application.

The illustrative examples recognize and take into account that nonautoclave processes rely heavily on edge breathing to extract the air from laminates. Vacuum is used to draw entrapped air down the length of the fiber tow to the edge of the part where it escapes the laminate. The illustrative examples recognize and take into account that when doubler plies do not extend to the edge of the part, the edges of the doubler plies are sealed off by the continuous plies above and below them. Edge breathing is not very affective in this scenario. The illustrative examples recognize and take into account that in the autoclave at 100PSI the air entrapped air is forced into solution and does not result in undesirable levels of porosity. The illustrative examples recognize and take into account that parts cured at only one atmosphere of pressure can have undesirable levels of porosity in the pad up area due to entrapped air.

The DVD process works by canceling out the vacuum clamping pressure on the laminate. The elimination of the clamping pressure, combined with heating, allows any entrapped gas to travel down the length of the fiber tow to the edge of the part where it escapes. The illustrative examples recognize and take into account that when the doubler plies do not extend to the edge of the part it can be difficult for the DVD process to efficiently remove trapped air from between the doubler plies. The illustrative examples recognize and take into account that the continuous plies above and below the non-continuous plies block the exposed ply edges of the doubler and impede air extraction. The areas with localized doublers can have higher levels of porosity when processed using the Double Vacuum Debulk process.

The existing solutions to this problem are to use brute force, or to use extended pre-cure vacuum dwells. A brute force approach can be performed at 45 to 100PSI. The illustrative examples recognize and take into account that a disadvantage to the brute force approach is the use of an autoclave.

Extended vacuum dwells can have a duration from four to twenty four hours. The larger the part the longer the pre-cure vacuum dwell. The illustrative examples recognize and take into account that in addition to the rate impact, the long vacuum dwells may not be effective.

The illustrative examples provide methods that extract the air through the laminate thickness directly from the localized pad up. The illustrative examples provide alternative methods to extended pre-cure vacuum dwells because the distance for the air to exit the preform is very short.

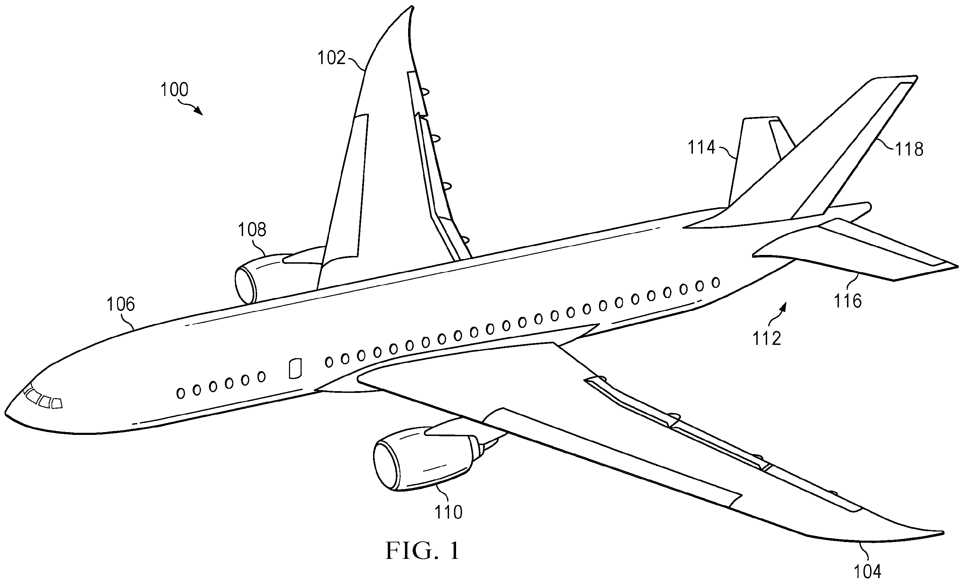

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft with composite components that can be formed using the illustrative examples. In some illustrative examples, at least one of a portion of wing **102,** wing **104,** or body **106** can be formed using the methods of the illustrative examples.

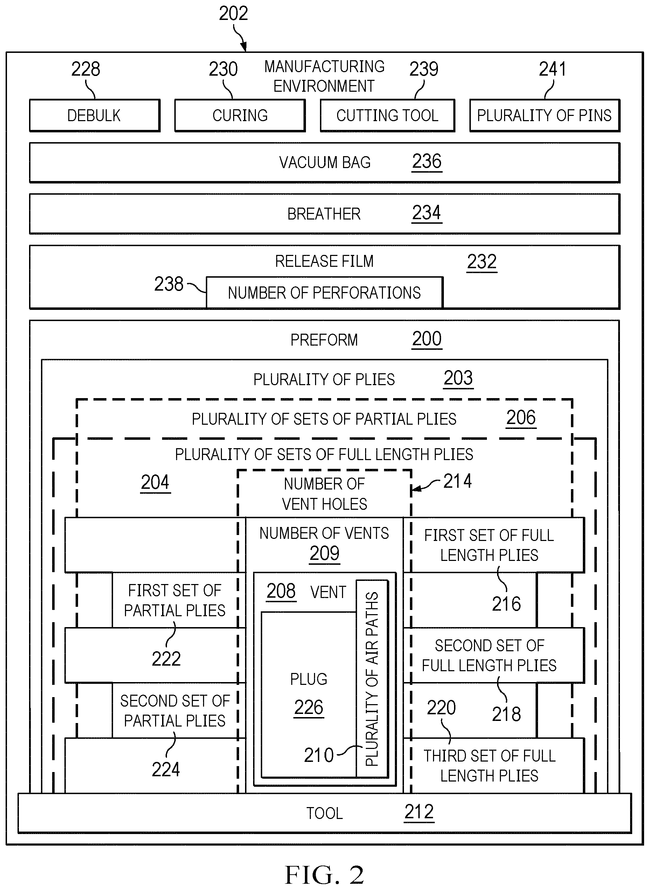

Turning now to **Figure 2****,** an illustration of a block diagram of a manufacturing environment is depicted in accordance with an illustrative example. Preform **200** in manufacturing environment **202** can be an example of a preform for forming a portion of aircraft **100** of **Figure 1****.**

Preform **200** is formed of plurality of plies **203.** Plurality of plies **203** are formed of composite material. In some illustrative examples, plurality of plies **203** can be referred to as a plurality of pre-preg plies. Preform **200** comprises plurality of sets of full length plies **204,** plurality of sets of partial plies **206** alternating with plurality of sets of full length plies **204,** and vent **208** extending through plurality of sets of partial plies **206.** Vent **208** provides plurality of air paths **210.** Plurality of air paths **210** allow for release of entrapped air from plurality of sets of partial plies **206.**

Vent **208** is one of number of vents **209.** As used herein, "a number of," when used with reference to items means one or more items. In some illustrative examples, number of vents **209** comprises more than one vent.

Plurality of air paths **210** is formed by plurality of sets of partial plies **206** and vent **208.** At least one of entrapped air, volatiles, and resin can travel along plurality of air paths **210.** During debulk **228** at least one of entrapped air, volatiles, and resin can travel along a respective air path of plurality of air paths **210** by traveling along a respective set of partial plies and through vent **208.** At least one of entrapped air or volatiles can travel through number of perforations **238** in release film **232.**

Vent **208** extends through all of plurality of sets of partial plies **206.** In some illustrative examples, vent **208** extends through an entirety of preform **200.** In some illustrative examples, vent **208** extends through only a portion of preform **200.**

In some illustrative examples, vent **208** is formed by laying up plurality of plies **203** on tool **212.** In some illustrative examples, forming plurality of plies **203** includes plurality of sets of full length plies **204** and plurality of sets of partial plies **206,** each partial ply of plurality of sets of partial plies **206** comprising a vent hole. In this illustrative example, plurality of sets of partial plies **206** and at least a portion of plurality of sets of full length plies **204** comprise number of vent holes **214.** In some illustrative examples, number of vent holes **214** is cut into plurality of sets of partial plies **206** and at least a portion of plurality of sets of full length plies **204** using one or more cutting tools such as a laser, a CNC machine, or other type of cutting tool **239.**

Plurality of plies **203** is laid up on tool **212** to form preform **200.** When number of vent holes **214** is stacked vertically, number of vent holes **214** forms vent **208** in preform **200.**

In some illustrative examples, vent **208** is formed by laying up plurality of plies **203.** In some illustrative examples, vent **208** is formed during the layup process by omitting material.

In some illustrative examples, vent **208** is a cut into preform **200.** After laying up plurality of plies **203,** vent **208** can be cut into preform **200** by cutting tool.

Plurality of sets of full length plies **204** comprises any desirable quantity of full length plies. Plurality of sets of full length plies **204** can be any desirable quantity of sets of full length plies. Any desirable quantity of full length plies can be present in each set of full length plies. Full length plies extend out to the edges of preform **200.**

Plurality of sets of partial plies **206** comprises any desirable quantity of partial length plies. Plurality of sets of partial plies **206** can be any desirable quantity of sets of partial length plies. Any desirable quantity of partial length plies can be present in each set of partial length plies.

In this illustrative example, plurality of sets of full length plies **204** comprises first set of full length plies **216,** second set of full length plies **218,** and third set of full length plies **220.** In this illustrative example, plurality of sets of full length plies **204** is interleaved with plurality of sets of partial plies **206.**

In this illustrative example, plurality of sets of partial plies **206** comprises first set of partial plies **222** and second set of partial plies **224.** First set of partial plies **222** is positioned between first set of full length plies **216** and second set of full length plies **218.** Second set of partial plies **224** is positioned between second set of full length plies **218** and third set of full length plies **220.**

In this illustrative example, vent **208** extends through first set of full length plies **216,** first set of partial plies **222,** second set of full lengths plies **218,** second set of partial plies **224,** and third set of full length plies **220.** In some illustrative examples, vent **208** can terminate prior to third set of full length plies **220.**

After layup, in some illustrative examples, plug **226** is positioned within vent **208.** In some illustrative examples, plug **226** is positioned within vent **208** prior to performing debulk **228** or curing **230** of preform **200.** Plug **226** comprises a material configured to maintain its geometry during debulk **228** and curing **230** of preform **200.** Plug **226** is formed of a material approved for contact with the composite material of preform **200.** Plug **226** can be formed of polytetrafluoroethylene (PTFE), Cork, metal, or other desirable material.

In some illustrative examples, preform **200** comprises plurality of plies **203** including plurality of sets of full length plies **204** and plurality of sets of partial plies **206.** Laying up plurality of plies **203** on tool **212** forms preform **200.** After forming preform **200,** plurality of pins **241** is pressed through plurality of sets of partial plies **206.**

Pressing plurality of pins **241** locally displaces fibers of plurality of sets of partial plies **206** to create number of vents **209.** In these illustrative examples, number of vents **209** can be referred to as vent paths. Vent paths allow for escape of air and other gases from plurality of sets of partial plies **206** during debulk and cure of preform **200.**

The fibers of preform **200** would be permanently displaced by pushing plurality of pins **241** into plurality of sets of partial plies **206.** A minor difference in material characteristics such as compression strength can result due to local crimping. Plurality of pins **241** is removed from preform **200** after processing.

After layup of preform **200,** release film **232,** breather **234,** and vacuum bag **236** are placed over preform **200** to perform at least one of debulk **228** or curing **230.** the release film comprising at least one perforation adjacent the vent Perforations will allow gas to pass through release film **232** (separator) into breather **234** covering preform **200.**

The illustration of manufacturing environment **202** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, plurality of sets of full length plies **204** can include any desirable quantity of sets of plies. In some illustrative examples, plurality of sets of full length plies **204** has more than three sets of full length plies. In some illustrative examples, plurality of sets of full length plies **204** has less than three sets of full length plies.

As another example, plurality of sets of partial plies **206** can include any desirable quantity of sets of plies. In some illustrative examples, plurality of sets of partial plies **206** has less than one set of partial plies. In some illustrative examples, plurality of sets of partial plies **206** has more than two sets of partial plies.

As yet another example, debulk **228** can take any desirable form of debulking. In some illustrative examples, debulk **228** can be a double vacuum debulk (DVD).

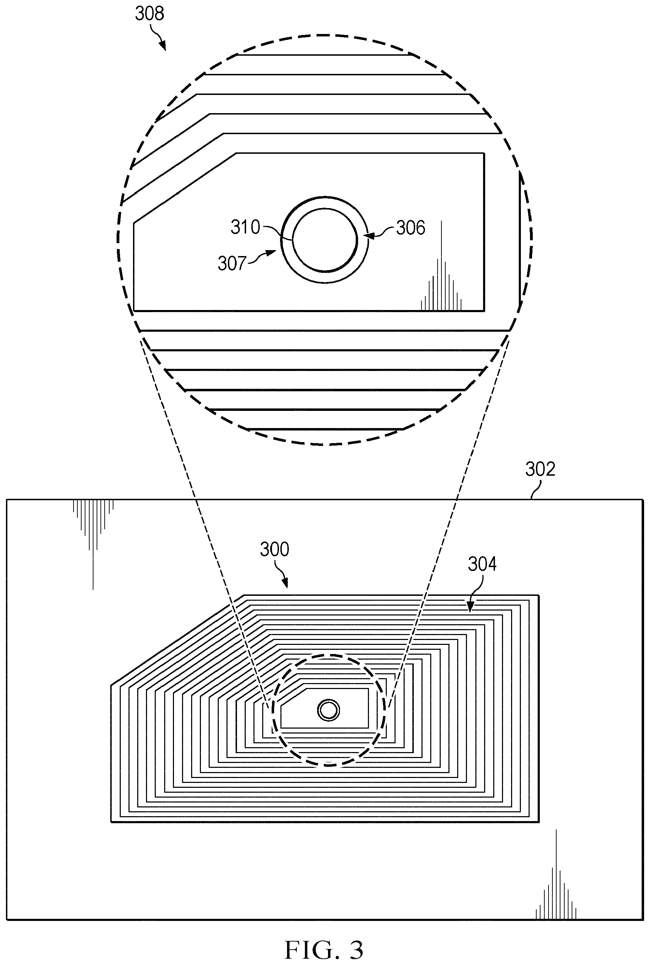

Turning now to **Figure 3****,** an illustration of a top view of a layup of a composite preform is depicted in accordance with an illustrative example. Composite preform is a physical implementation of preform **200** of **Figure 2****.**

Preform **300** is laid up on tool **302.** Preform **300** comprises step-downs **304** formed by series of partial plies in preform **300.** Vent **306** extends through at least a portion of preform **300.** Vent **306** extends through each partial ply of a plurality of sets of partial plies in preform **300.**

In view **308,** plug **310** is placed within vent **306.** Plug **310** is positioned prior to debulk of preform **300.**

In some illustrative examples, vent **306** is formed by laying up layers of preform **300** on tool **302.** In these illustrative examples, vent **306** is formed of a number of vent holes formed in the plurality of partial plies and at least a portion of the full length plies prior to stacking the plies to form preform **300** on tool **302.** In these illustrative examples, the number of vent holes are stacked over each other to form vent **306.**

In other illustrative examples, vent **306** is formed after preform **300** is laid up on tool **302.** In some of these illustrative examples, vent **306** is cut into preform **300** after preform **300** is laid up on tool **302.**

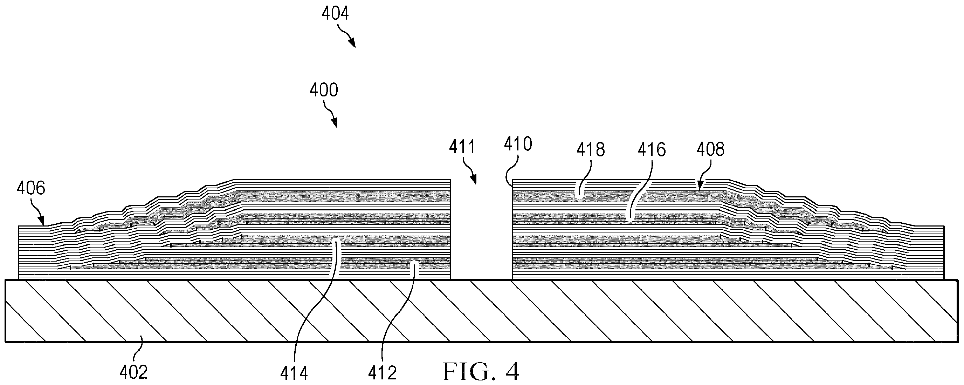

Turning now to **Figure 4****,** an illustration of a cross-sectional view of a layup of a composite preform is depicted in accordance with an illustrative example. Preform **400** is a physical implementation of preform **200** of **Figure 2****.** Preform **400** is laid-up on tool **402.** In view **404,** preform **400** comprises plurality of sets of full length plies **406** and plurality of sets of partial plies **408.** Number of vent holes **410** extends through plurality of sets of partial plies **408.** In this illustrative example, number of vent holes **410** comprises vent **411.**

In this illustrative example, plurality of sets of partial plies **408** comprises first set of partial plies **412,** second set of partial plies **414,** third set of partial plies **416,** and fourth set of partial plies **418.** In this illustrative example, vent **411** extends through each of first set of partial plies **412,** second set of partial plies **414,** third set of partial plies **416,** and fourth set of partial plies **418.** In this illustrative example, vent **411** extends through each of plurality of sets of full length plies **406.**

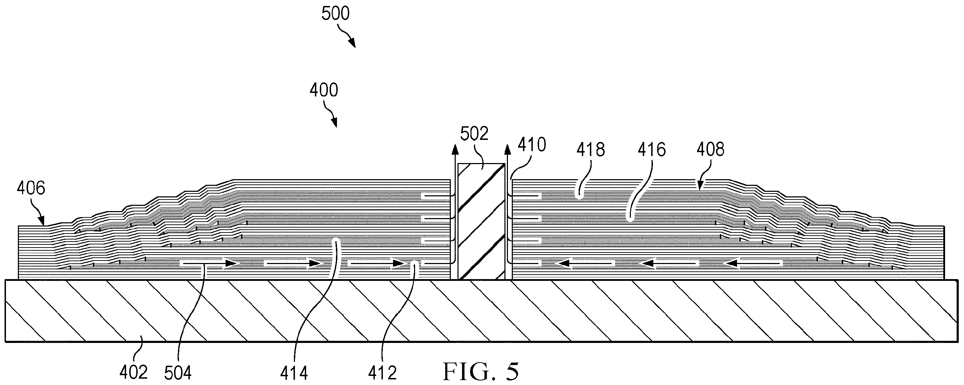

Turning now to **Figure 5****,** an illustration of a cross-sectional view of a layup of a composite preform is depicted in accordance with an illustrative example. View **500** is a view of preform **400** prior to curing. In view **500,** plug **502** has been placed in vent **411.** Plug **502** maintains the shape of vent **411** during debulk and curing. Plug **502** also prevents excess resin from leaving preform **400** and creating a resin starved area in preform **400** surrounding vent **411** .

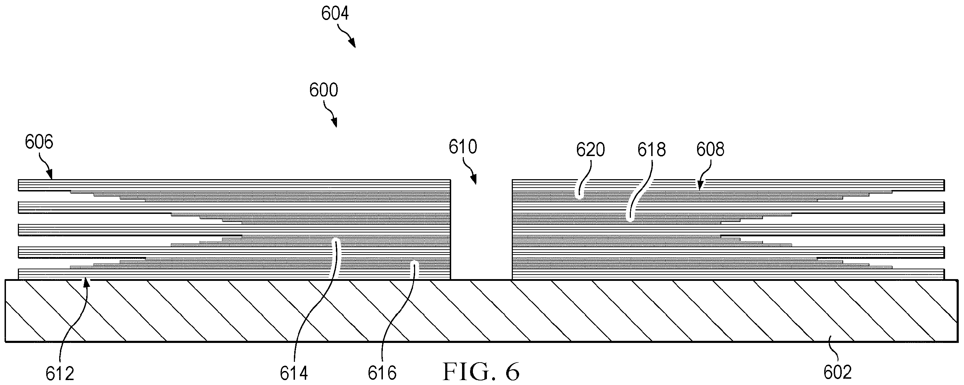

Turning now to **Figure 6****,** an illustration of a cross-sectional view of a layup of a composite preform is depicted in accordance with an illustrative example. Preform **600** is a physical implementation of preform **200** of **Figure 2****.** Preform **600** is laid up on tool **602.** In view **604** plurality of sets of full length plies **606** and plurality of sets of partial plies **608** are visible. Vent **610** extends through each of plurality of sets of partial plies **608.** Vent **610** extends through only a portion of plurality of sets of full length plies **606.** For example, vent **610** does not extend through set of full length plies **612.**

As depicted, vent **610** extends through set of partial plies **614,** set of partial plies **616,** set of partial plies **618,** set of partial plies **618** and all sets of full length plies above and between plurality of sets of partial plies **608.** By vent **610** extending through each of plurality of sets of partial plies **608** and all sets of full length plies above and between plurality of sets of full length plies **606,** air paths are created to vent air and other gasses from plurality of sets of partial plies **608.** The air paths are formed by each of plurality of sets of partial plies **608** and vent **610.** At least one of entrapped air, volatiles, and resin can travel along the air paths.

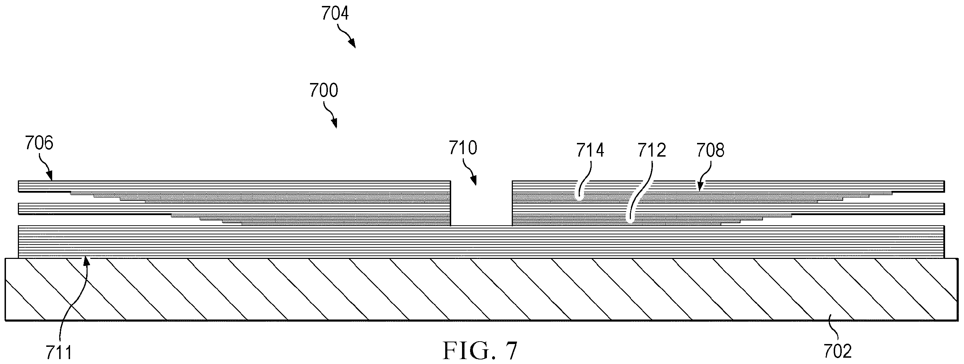

Turning now to **Figure 7****,** an illustration of a cross-sectional view of a layup of a composite preform is depicted in accordance with an illustrative example. Preform **700** is a physical implementation of preform **200** of **Figure 2****.** Preform **700** is laid up on tool **702.** In view **704,** preform **700** comprises plurality of sets of full length plies **706** and plurality of sets of partial plies **708.** Vent **710** extends through each of plurality of sets of partial plies **708.** Vent **710** extends through only a portion of plurality of sets of full length plies **706.** For example, vent **710** does not extend through sets of full length plies **711.**

As depicted, vent **710** extends through set of partial plies **712,** set of partial plies **714,** and all sets of full length plies above and between plurality of sets of partial plies **708.** By vent **710** extending through each of plurality of sets of partial plies **708** and all sets of full length plies above and between plurality of sets of full length plies **706,** air paths are created to vent air and other gasses from plurality of sets of partial plies **708.** The air paths are formed by each of plurality of sets of partial plies **708** and vent **710.** At least one of entrapped air, volatiles, and resin can travel along the air paths.

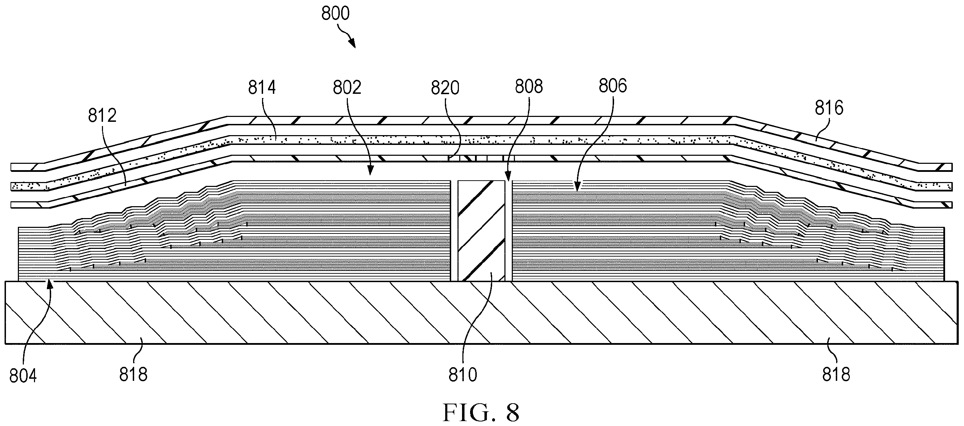

Turning now to **Figure 8****,** an illustration of a cross-sectional view of a layup of a composite preform with vacuum bagging materials is depicted in accordance with an illustrative example. In view **800,** preform **802** has been laid up on tool **818.** Preform **802** is a physical implementation of preform **200** of **Figure 2****.**

Preform **802** comprises plurality of sets of full length plies **804** interleaved with plurality of sets of partial plies **806.** Vent **808** extends through the thickness of preform **802.** Vent **808** extends through plurality of sets of full length plies **804** and plurality of sets of partial plies **806.**

In this illustrative example, plug **810** is present in vent **808.** Release film **812,** breather **814,** and vacuum bag **816** are positioned over preform **802.** Vacuum bag **816** will be sealed to tool **818** to perform curing or debulk. In this illustrative example, release film **812** comprises perforations **820** positioned over vent **808.** Perforations **820** allow gases from plurality of sets of partial plies **806** to travel from vent **808** to breather **814.**

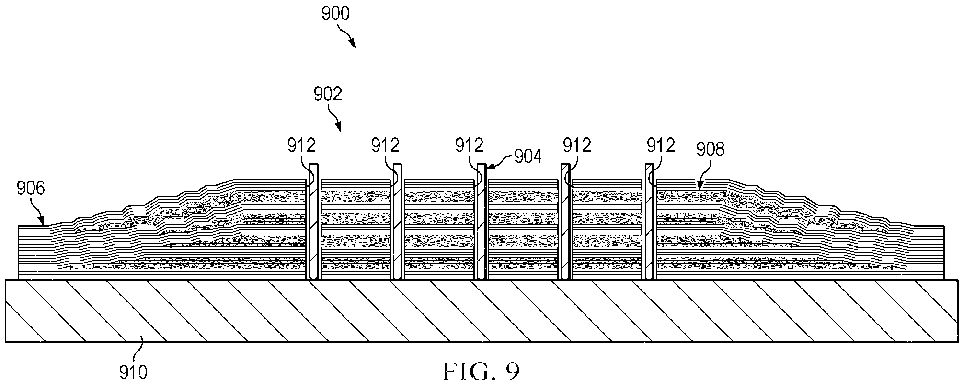

Turning now to **Figure 9****,** an illustration of a cross-sectional view of a layup of a composite preform with a plurality of pins is depicted in accordance with an illustrative example. View **900** is a view of preform **902** with plurality of pins **904.** Preform **902** comprises plurality of plies **905** including plurality of sets of full length plies **906** and plurality of sets of partial plies **908.** Laying up plurality of plies **905** on tool **910** forms preform **902.** After forming preform **902,** plurality of pins **904** is pressed through plurality of sets of partial plies **908.**

Pressing plurality of pins **904** locally displaces fibers of plurality of sets of partial plies **908** to create vent paths **912.** Vent paths **912** allow for escape of air and other gases from plurality of sets of partial plies **908** during debulk and cure of preform **902.**

The fibers of preform **902** would be permanently displaced. A minor difference in material characteristics such as compression strength can result due to local crimping. Plurality of pins **904** are removed from preform **902** after processing.

In some illustrative examples, prior to debulking or curing, a release film (not depicted) comprising a number of openings is positioned over the plurality of pins and preform **902.** The number of openings positioned over plurality of pins **904** allows for gases from vent paths **912** to escape to a breather film.

In this illustrative example, vent paths **912** formed by plurality of pins **904** can be used in locations without future access holes, windows, systems passthroughs, or other removed portions. In this illustrative example, vent paths **912** are used instead of a single vent formed or cut into preform **902.**

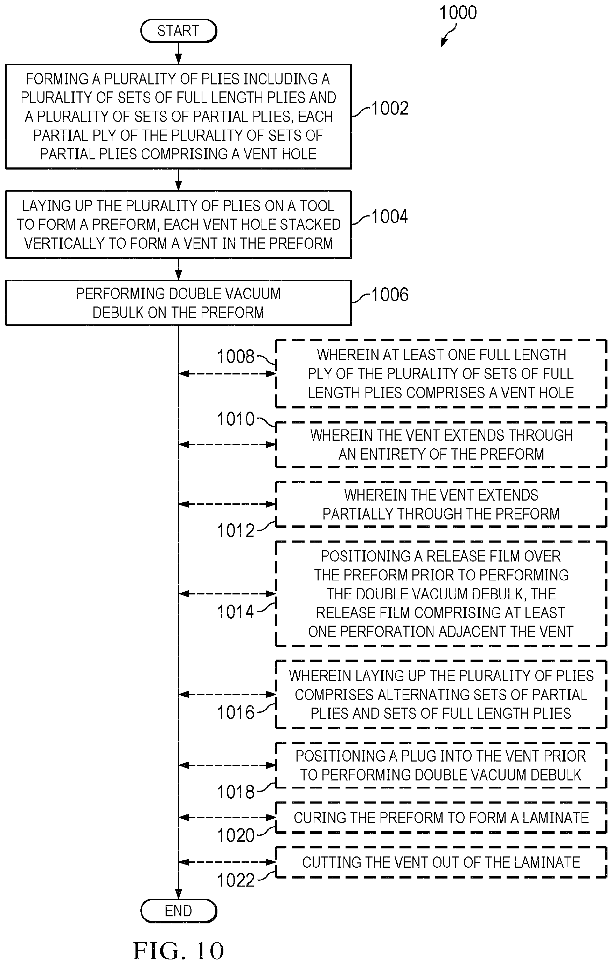

Turning now to **Figure 10****,** a flowchart of a method of forming a composite structure is depicted in accordance with an illustrative example. Method **1000** can be used to form a component of aircraft **100** of **Figure 1****.** Method **1000** can be used to form a composite structure using preform **200** of **Figure 2****.** Method **1000** can be performed on preform **300** of **Figure 3****.** Method **1000** can be performed on preform **400** of **Figures 4-5****.** Method **1000** can be performed on preform **600** of **Figure 6****.** Method **1000** can be performed on preform **700** of **Figure 7****.** Method **1000** can be performed on preform **802** of **Figure 8****.** Method **1000** can be performed on preform **902** of **Figure 9****.**

Method **1000** forms a plurality of plies including a plurality of sets of full length plies and a plurality of sets of partial plies, each partial ply of the plurality of sets of partial plies comprising a vent hole (operation **1002**). Method **1000** lays up the plurality of plies on a tool to form a preform, each vent hole stacked vertically to form a vent in the preform (operation **1004**). Method **1000** performs debulk on the preform (operation **1006**). Afterwards, method **1000** terminates.

In some illustrative examples, at least one full length ply of the plurality of sets of full length plies comprises a vent hole (operation **1008**). The full length plies above the partial plies of the plurality of sets of partial plies will comprise a vent hole. The full length plies between the partial plies of the plurality of sets of partial plies will comprise a vent hole.

In some illustrative examples, the vent extends through an entirety of the preform (operation **1010**). In some illustrative examples, the vent extends partially through the preform (operation **1012**).

In some illustrative examples, positioning a release film over the preform prior to performing the debulk, the release film comprising at least one perforation adjacent the vent (operation **1014**). The at least one perforation allows for gases from the vent to travel through the release film via the at least one perforation and to a breather layer.

In some illustrative examples, laying up the plurality of plies comprises alternating sets of partial plies and sets of full length plies (operation **1016**).

In some illustrative examples, method **1000** positions a plug into the vent prior to performing debulk (operation **1018**). When present, a plug can reduce migration of resin into the vent during cure.

In some illustrative examples, method **1000** cures the preform to form a laminate (operation **1020**). In some illustrative examples, method **1000** cuts the vent out of the laminate (operation **1022**). The vent can be cut out of the laminate to form an access hole, a system pass-through a fastener location, or other desirable feature.

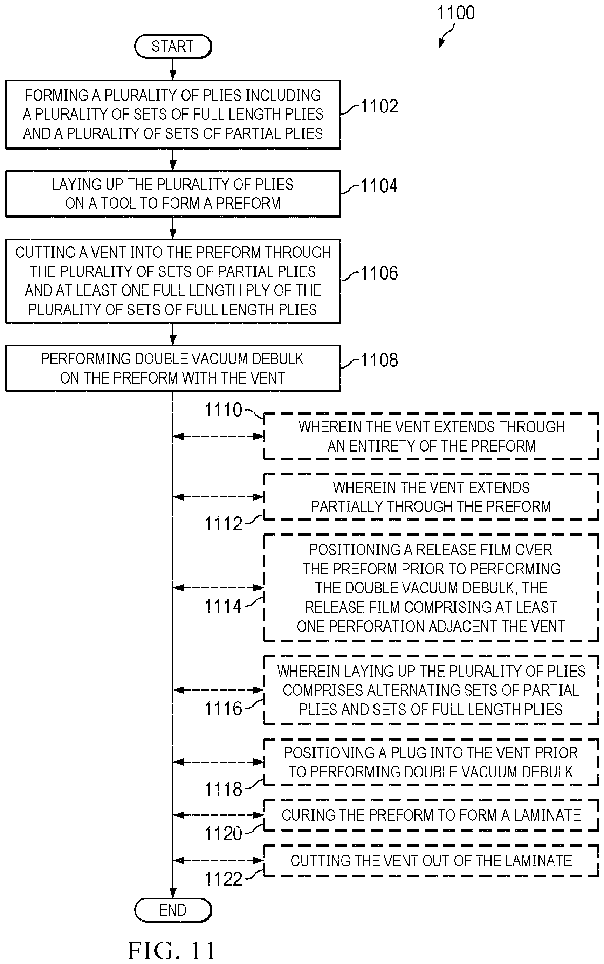

Turning now to **Figure 11****,** a flowchart of a method of forming a composite structure is depicted in accordance with an illustrative example. Method **1100** can be used to form a component of aircraft **100** of **Figure 1****.** Method **1100** can be used to form a composite structure using preform **200** of **Figure 2****.** Method **1100** can be performed on preform **300** of **Figure 3****.** Method **1100** can be performed on preform **400** of **Figures 4-5****.** Method **1100** can be performed on preform **600** of **Figure 6****.** Method **1100** can be performed on preform **700** of **Figure 7****.** Method **1100** can be performed on preform **802** of **Figure 8****.** Method **1100** can be performed on preform **902** of **Figure 9****.**

Method **1100** forms a plurality of plies including a plurality of sets of full length plies and a plurality of sets of partial plies (operation **1102**). Method **1100** lays up the plurality of plies on a tool to form a preform (operation **1104**). Method **1100** cuts a vent into the preform through the plurality of sets of partial plies and at least one full length ply of the plurality of sets of full length plies (operation **1106**). Method **1100** performs debulk on the preform with the vent (operation **1108**). Afterwards, method **1100** terminates.

In some illustrative examples, the vent extends through an entirety of the preform (operation **1110**). In some illustrative examples, the vent extends partially through the preform (operation **1112**).

In some illustrative examples, method **1100** positions a release film over the preform prior to performing the debulk, the release film comprising at least one perforation adjacent the vent (operation **1114**). The at least one perforation allows for gases from the vent to travel through the release film via the at least one perforation and to a breather layer.

In some illustrative examples, laying up the plurality of plies comprises alternating sets of partial plies and sets of full length plies (operation **1116**).

In some illustrative examples, method **1100** positions a plug into the vent prior to performing debulk (operation **1118**). When present, a plug can reduce migration of resin into the vent during cure.

In some illustrative examples, method **1100** cures the preform to form a laminate (operation **1120**). In some illustrative examples, method **1100** cuts the vent out of the laminate (operation **1122**). The vent can be cut out of the laminate to form an access hole, a system pass-through a fastener location, or other desirable feature.

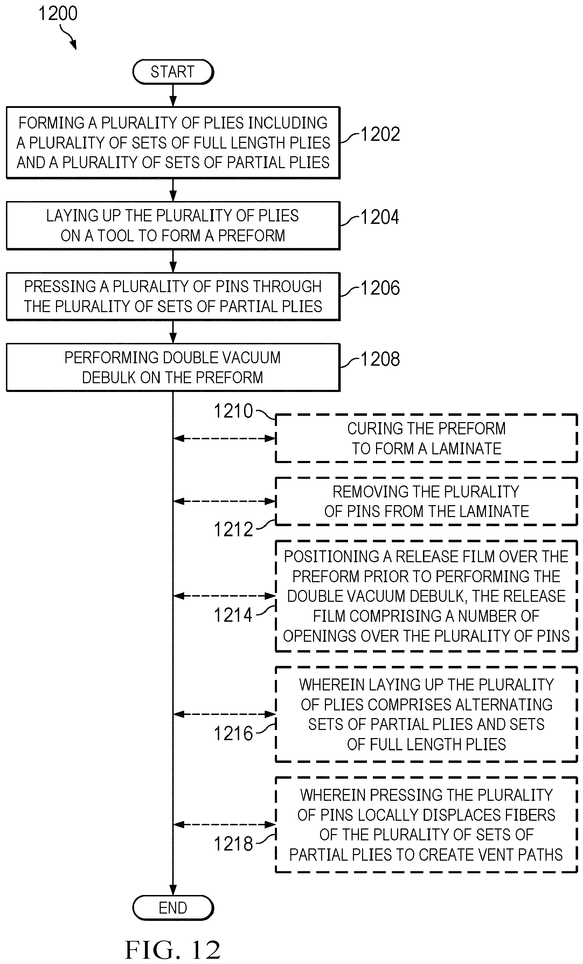

Turning now to **Figure 12****,** a flowchart of a method of forming a composite structure is depicted in accordance with an illustrative example. Method **1200** can be used to form a component of aircraft **100** of **Figure 1****.** Method **1200** can be used to form a composite structure using preform **200** of **Figure 2****.** Method **1200** can be performed on preform **300** of **Figure 3****.** Method **1200** can be performed on preform **400** of **Figures 4-5****.** Method **1200** can be performed on preform **600** of **Figure 6****.** Method **1200** can be performed on preform **700** of **Figure 7****.** Method **1200** can be performed on preform **802** of **Figure 8****.** Method **1200** can be performed on preform **902** of **Figure 9****.**

Method **1200** forms a plurality of plies including a plurality of sets of full length plies and a plurality of sets of partial plies (operation **1202**). Method **1200** lays up the plurality of plies on a tool to form a preform (operation **1204**). Method **1200** presses a plurality of pins through the plurality of sets of partial plies (operation **1206**). Method **1200** performs debulk on the preform (operation **1208**). Afterwards, method **1200** terminates.

In some illustrative examples, method **1200** cures the preform to form a laminate (operation **1210**). In some illustrative examples, method **1100** removes the plurality of pins from the laminate (operation **1212**).

In some illustrative examples, method **1200** positions a release film over the preform prior to performing the debulk, the release film comprising a number of openings over the plurality of pins (operation **1214**). The number of openings allows for gases from the plurality of sets of partial plies to travel through the release film via the number of openings and to a breather layer.

In some illustrative examples, laying up the plurality of plies comprises alternating sets of partial plies and sets of full length plies (operation **1216**). In some illustrative examples, pressing the plurality of pins locally displaces fibers of the plurality of sets of partial plies to create vent paths (operation **1218**).

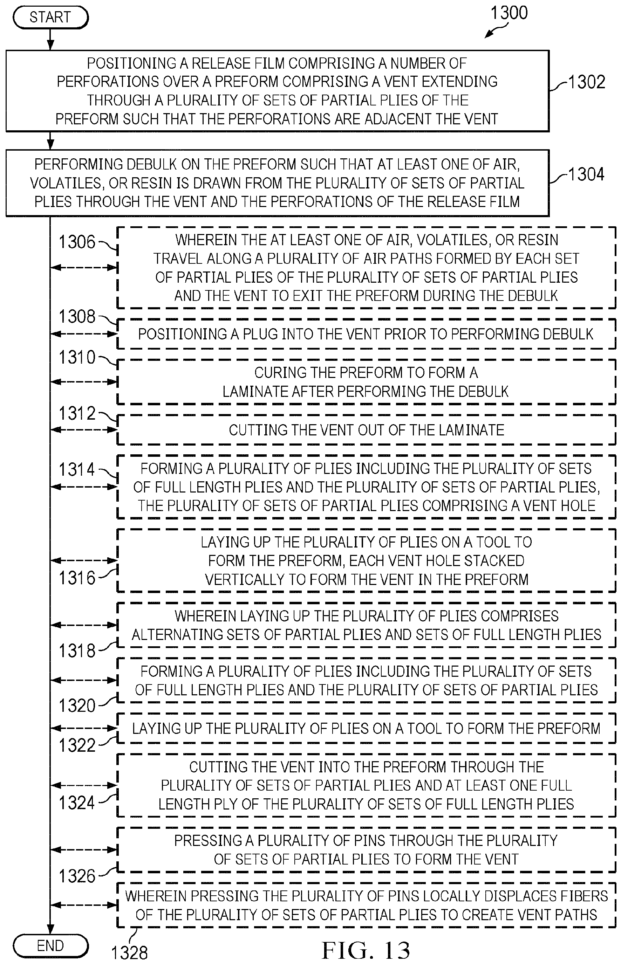

Turning now to **Figure 13****,** a flowchart of a method of forming a composite structure is depicted in accordance with an illustrative example. Method **1300** can be used to form a component of aircraft **100** of **Figure 1****.** Method **1300** can be used to form a composite structure using preform **200** of **Figure 2****.** Method **1300** can be performed on preform **300** of **Figure 3****.** Method **1300** can be performed on preform **400** of **Figures 4-5****.** Method **1300** can be performed on preform **600** of **Figure 6****.** Method **1300** can be performed on preform **700** of **Figure 7****.** Method **1300** can be performed on preform **802** of **Figure 8****.** Method **1300** can be performed on preform **902** of **Figure 9****.**

Method **1300** positions a release film comprising a number of perforations over a preform comprising a vent extending through a plurality of sets of partial plies of the preform such that the perforations are adjacent the vent (operation **1302**). Method **1300** performs debulk on the preform such that at least one of air, volatiles, or resin is drawn from the plurality of sets of partial plies through the vent and the perforations of the release film (operation **1304**). Afterwards, method **1300** terminates.

In some illustrative examples, the at least one of air, volatiles, or resin travel along a plurality of air paths formed by each set of partial plies of the plurality of sets of partial plies and the vent to exit the preform during the debulk (operation **1306**).

In some illustrative examples, method **1300** positions a plug into the vent prior to performing debulk (operation **1308**). In some illustrative examples, method **1300** cures the preform to form a laminate after performing the debulk (operation **1310**). In some illustrative examples, method **1300** cuts the vent out of the laminate (operation **1312**).

In some illustrative examples, method **1300** forms a plurality of plies including a plurality of sets of full length plies and the plurality of sets of partial plies, each partial ply of the plurality of sets of partial plies comprising a vent hole (operation **1314**). In some illustrative examples, method **1300** lays up the plurality of plies on a tool to form the preform, each vent hole stacked vertically to form the vent in the preform (operation **1316**).

In some illustrative examples, laying up the plurality of plies comprises alternating sets of partial plies and sets of full length plies (operation **1318**). In some illustrative examples, method **1300** forms a plurality of plies including a plurality of sets of full length plies and the plurality of sets of partial plies (operation **1320**). In some illustrative examples, method **1300** lays up the plurality of plies on a tool to form the preform (operation **1322**). In some illustrative examples, method **1300** cuts the vent into the preform through the plurality of sets of partial plies and at least one full length ply of the plurality of sets of full length plies (operation **1324**).

In some illustrative examples, method 1300 presses a plurality of pins through the plurality of sets of partial plies to form a number of vents including the vent (operation **1326**). In some illustrative examples, pressing the plurality of pins locally displaces fibers of the plurality of sets of partial plies to create vent paths (operation **1328**).

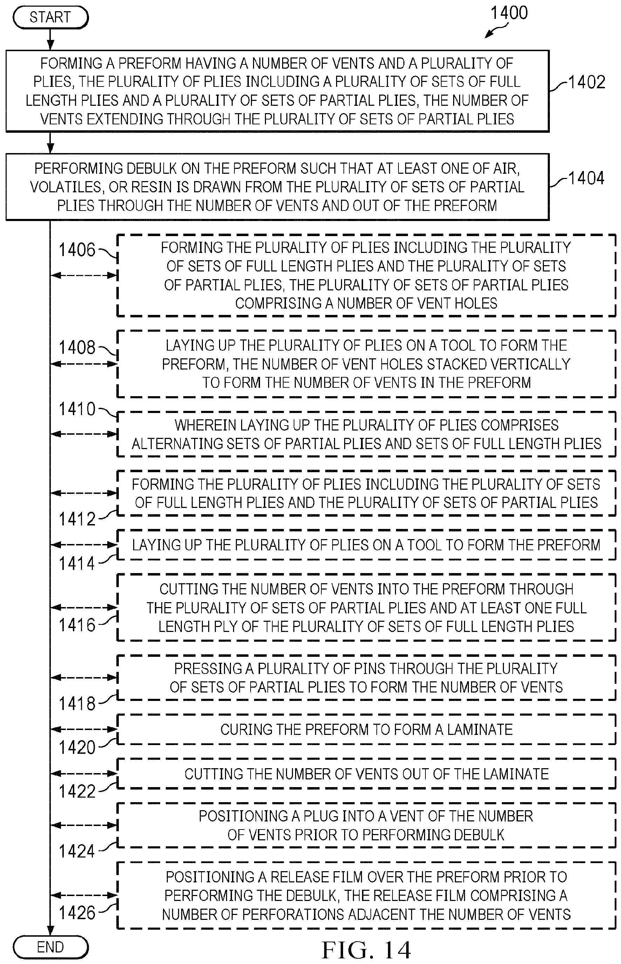

Turning now to **Figure 14****,** a flowchart of a method of forming a composite structure is depicted in accordance with an illustrative example. Method **1400** can be used to form a component of aircraft **100** of **Figure 1****.** Method **1400** can be used to form a composite structure using preform **200** of **Figure 2****.** Method **1400** can be performed on preform **300** of **Figure 3****.** Method **1400** can be performed on preform **400** of **Figures 4-5****.** Method **1400** can be performed on preform **600** of **Figure 6****.** Method **1400** can be performed on preform **700** of **Figure 7****.** Method **1400** can be performed on preform **802** of **Figure 8****.** Method **1400** can be performed on preform **902** of **Figure 9****.**

Method **1400** forms a preform having a number of vents and a plurality of plies, the plurality of plies including a plurality of sets of full length plies and a plurality of sets of partial plies, the number of vents extending through the plurality of sets of partial plies (operation **1402**). Method **1400** performs debulk on the preform such that at least one of air, volatiles, or resin are drawn from the plurality of sets of partial plies through the number of vents and out of the preform (operation **1404**). Afterwards, method **1400** terminates.

In some illustrative examples, method **1400** forms the plurality of plies including the plurality of sets of full length plies and the plurality of sets of partial plies, the plurality of sets of partial plies comprising a number of vent holes (operation **1406**). In some illustrative examples, method **1400** lays up the plurality of plies on a tool to form the preform, the number of vent holes stacked vertically to form the number of vents in the preform (operation **1408**). In some illustrative examples, laying up the plurality of plies comprises alternating sets of partial plies and sets of full length plies (operation **1410**).

In some illustrative examples, method **1400** forms the plurality of plies including the plurality of sets of full length plies and the plurality of sets of partial plies (operation **1412**). In some illustrative examples, method **1400** lays up the plurality of plies on a tool to form the preform (operation **1414**). In some illustrative examples, method **1400** cuts the number of vents into the preform through the plurality of sets of partial plies and at least one full length ply of the plurality of sets of full length plies (operation **1416**).

In some illustrative examples, method **1400** presses a plurality of pins through the plurality of sets of partial plies to form the number of vents (operation **1418**).

In some illustrative examples, the number of vents extends through an entirety of the preform. In some illustrative examples, the number of vents extends partially through the preform.

In some illustrative examples, method **1400** positions a release film over the preform prior to performing the debulk, the release film comprising a number of perforations adjacent the number of vents (operation **1426**). In some illustrative examples, method **1400** positions a plug into a vent of the number of vents prior to performing debulk (operation **1424**). In some illustrative examples, method **1400** cures the preform to form a laminate (operation **1420**). In some illustrative examples, method **1400** cuts the number of vents out of the laminate (operation **1422**).

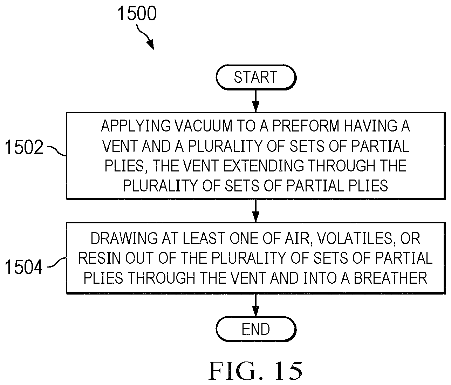

Turning now to **Figure 15****,** a flowchart of a method of forming a composite structure is depicted in accordance with an illustrative example. Method **1500** can be used to form a component of aircraft **100** of **Figure 1****.** Method **1500** can be used to form a composite structure using preform **200** of **Figure 2****.** Method **1500** can be performed on preform **300** of **Figure 3****.** Method **1500** can be performed on preform **400** of **Figures 4-5****.** Method **1500** can be performed on preform **600** of **Figure 6****.** Method **1500** can be performed on preform **700** of **Figure 7****.** Method **1500** can be performed on preform **802** of **Figure 8****.** Method **1500** can be performed on preform **902** of **Figure 9****.**

Method **1500** applies vacuum to a preform having a vent and a plurality of sets of partial plies, the vent extending through the plurality of sets of partial plies (operation **1502**). Method **1500** draws at least one of air, volatiles, or resin out of the plurality of sets of partial plies through the vent and into a breather (operation **1504**). Afterwards, method **1500** terminates.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1008** through operation **1022** may be optional. For example, operation **1110** through operation **1122** may be optional. As another example, operation **1210** through operation **1218** may be optional.

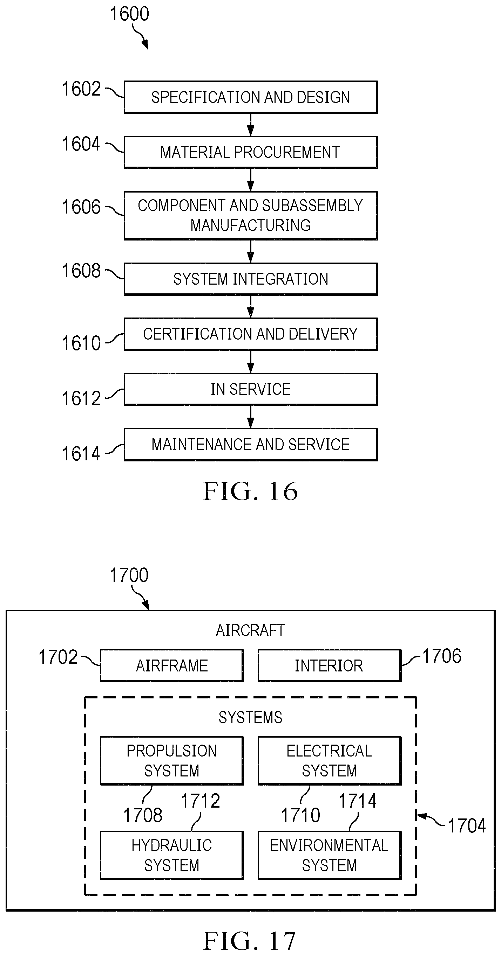

Illustrative examples of the present disclosure may be described in the context of aircraft manufacturing and service method **1600** as shown in **Figure 16** and aircraft **1700** as shown in **Figure 17****.** Turning first to **Figure 16****,** an illustration of an aircraft manufacturing and service method in a form of a block diagram is depicted in accordance with an illustrative example. During pre-production, aircraft manufacturing and service method **1600** may include specification and design **1602** of aircraft **1700** in **Figure 17** and material procurement **1604.**

During production, component and subassembly manufacturing **1606** and system integration **1608** of aircraft **1700** takes place. Thereafter, aircraft **1700** may go through certification and delivery **1610** in order to be placed in service **1612.** While in service **1612** by a customer, aircraft **1700** is scheduled for routine maintenance and service **1617,** which may include modification, reconfiguration, refurbishment, or other maintenance and service.

Each of the processes of aircraft manufacturing and service method **1600** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 17****,** an illustration of an aircraft in a form of a block diagram is depicted in which an illustrative example may be implemented. In this example, aircraft **1700** is produced by aircraft manufacturing and service method **1600** of **Figure 16** and may include airframe **1702** with plurality of systems **1704** and interior **1706.** Examples of systems **1704** include one or more of propulsion system **1708,** electrical system **1710,** hydraulic system **1712,** and environmental system **1714.** Any number of other systems may be included.

Apparatuses and methods embodied herein may be employed during at least one of the stages of aircraft manufacturing and service method **1600.** One or more illustrative examples may be manufactured or used during at least one of component and subassembly manufacturing **1606,** system integration **1608,** in service **1612,** or maintenance and service **1617** of **Figure 16****.**

The illustrative examples provide a method to vent trapped doubler plies in a composite preform. The illustrative examples make an aligned hole common to each doubler ply. The vent hole could be drilled, could be made during the layup process (omitting material), prepunched in each ply, or created post layup using an ultrasonic hole cutter or a path created with displaced fibers into the doubler area.

In some illustrative examples, the vent hole can later be drilled to a larger diameter and used for assembly. In some illustrative examples, the vent hole is filled with resin after debaulk and during cure any resulting resin migration facilitates interlaminar toughness.

In some illustrative examples, a slightly undersized plug can be placed in the vent hole to prevent excess resin migration during debulk and removed during cure to allow resin migration. In some illustrative examples, the vent hole is in same location and smaller than the hole used for production requirements for fasteners and other features.

The vent hole(s) allow trapped gasses to be removed from the doubler plies. In some illustrative examples, a slightly undersized plug can be placed in the hole to prevent excess resin migration during cure.

In some illustrative examples, the method leverages the fact that the pad up exists due to a future penetration at that location. In these illustrative examples, an undersized hole can be created in the same location during or after the layup process. This vent hole, common to all the pad up plies, allows the entrapped air to be extracted through the Z-axis of the laminate. The hole does not need to be large. In some illustrative examples, a single vent hole as small as .25" can be used in the DVD process to vent pad ups. The holes can be cut using NC controlled cutters prior to layup, or material can be locally omitted during the layup process if AFP machines are being used. Optionally, ultrasonic hole punches can be used to create vent holes post layup.

In some illustrative examples, a PTFE or cork plug is placed in the hole to prevent excess resin loss at the vent hole location. In some illustrative examples, some modifications to the cure vacuum bagging is made to allow the gas extraction at the location of the vent hole. In some illustrative examples, this modification includes a few small perforations through the solid separator film over the vent location(s). Perforations will allow gas to pass through the separator film into breather material covering the part.

The illustrative examples provide methods for evacuating the air from trapped doublers plies in the acreage area of laminate that do not extend to the edge of the part. These localized doubler plies tend to trap air, and create porosity in cured parts, due to their edges being sealed by the continuous plies above and below them. The reason these trapped doubler plies are typically used is to locally reinforce a laminate where there will be an aperture placed (machined or drilled) in subsequent production operations. This disclosure uses under sized holes placed in the production hole locations prior to cure to allow gasses to escape from the trapped doubler plies when Double Vacuum Debulk (DVD) or Vacuum Bag Only (VBO) cure processes are used.

The benefit of the vent holes is that is allows the air to be extracted from the edge of the trapped doubler plies and then up through the thickness of the laminate. The extraction distance is greatly shortened by use of the vent or plurality of pins and eliminates the use of extended precure vacuum dwells. The illustrative examples allow for previously autoclave only pre-pregs to be processed using the DVD method even if the layup includes trapped doubler plies.

Some of the illustrative examples provide for a perforation or hole be placed in each ply common to the pad up location. These holes will be aligned during the layup process. In some illustrative examples, if the hole is larger than .25", a PTFE plug or dam, slightly smaller than the hole diameter, can be placed in the hole. A plug or dam will reduce resin loss. The solid separator film used in the cure vacuum bag can be perforated at the location of the vent hole. The perforated separator film will allow the air to escape the exposed ply edges inside hole, travel through the perforated separator film, and into the breather over the laminate. If the pad up plies do not continue through the full thickness of the laminate, the vent hole need not be full thickness.

The illustrative examples allow pre-pregs that previously could only be used with autoclave cures to be cured without using an autoclave. The elimination of autoclave processing for these pre-pregs will result in cost savings and a cost avoidance related to the acquisition and operation of autoclaves.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A preform (200) comprising:
a plurality of sets of full length plies (204);
a plurality of sets of partial plies (206) alternating with the plurality of sets of full length plies (204); and
a vent (208) extending through the plurality of sets of partial plies (206).

2. The preform (200) of claim 1, wherein:
the vent (208) extends through an entirety of the preform (200); and/or
the vent (208) is a cut into the preform (200).

3. The preform (200) of claim 1 or 2, further comprising:
a plug (226) positioned within the vent (208), preferably wherein the plug (226) comprises a material configured to maintain its geometry during debulk (228) and cure of the preform (200).

4. The preform (200) of any one of claims 1-3, wherein the vent (208) is one of a number of vents formed by pressing a plurality of pins through the plurality of sets of partial plies (206), preferably wherein the number of vents comprises locally displaced fibers within the plurality of sets of partial plies (206).

5. The preform (200) of any one of claims 1-4, wherein the vent (208) comprises a number of vent holes within the plurality of sets of partial plies (206) and at least a portion of the plurality of sets of full length plies (204) stacked vertically.

6. A method (1300) of performing composite manufacturing, the method comprising:
positioning (1302) a release film (232) comprising a number of perforations (239) over a preform (200) comprising a vent (208) extending through a plurality of sets of partial plies (206) of the preform (200) such that the perforations (239) are adjacent the vent (208); and
performing (1304) debulk (228) on the preform (200) such that at least one of air, volatiles, or resin is drawn from the plurality of sets of partial plies through the vent and the perforations (239) of the release film (232), preferably wherein (1308) the at least one of air, volatiles, or resin travel along a plurality of air paths formed by each set of partial plies of the plurality of sets of partial plies and the vent to exit the preform during the debulk.

7. The method (1300) of claim 6, further comprising:
positioning (1310) a plug (226) into the vent (208) prior to performing debulk (228); and/or
curing (1306) the preform (200) to form a laminate after performing the debulk, and
cutting (1312) the vent (208) out of the laminate.

8. The method (1300) of claim 6 or 7, further comprising:
forming (1314) a plurality of plies (203) including a plurality of sets of full length plies (204) and the plurality of sets of partial plies (206), each partial ply of the plurality of sets of partial plies (206) comprising a vent hole (214); and
laying up (1316) the plurality of plies (203) on a tool (212) to form the preform (200), each vent hole (214) stacked vertically to form the vent (208) in the preform (200), preferably wherein (1318) laying up the plurality of plies (203) comprises alternating sets of partial plies and sets of full length plies.

9. The method (1300) of any one of claims 6-8, further comprising:
forming (1320) a plurality of plies (203) including a plurality of sets of full length plies (204) and the plurality of sets of partial plies (206);
laying up (1322) the plurality of plies (203) on a tool (212) to form the preform (200); and
cutting (1324) the vent (208) into the preform (200) through the plurality of sets of partial plies (206) and at least one full length ply of the plurality of sets of full length plies (204), or
pressing (1326) a plurality of pins through the plurality of sets of partial plies (206) to form a number of vents (209) including the vent (208), preferably wherein (1328) pressing the plurality of pins locally displaces fibers of the plurality of sets of partial plies (206) to create vent (208) paths.

10. A method (1400) of forming a composite structure, the method comprising:
forming (1402) a preform (200) having a number of vents (209) and a plurality of plies (203), the plurality of plies (203) including a plurality of sets of full length plies (204) and a plurality of sets of partial plies (206), the number of vents extending through the plurality of sets of partial plies (206); and
performing (1404) debulk (228) on the preform (200) such that at least one of air, volatiles, or resin are drawn from the plurality of sets of partial plies through the number of vents and out of the preform (200).

11. The method (1400) of claim 10, wherein forming the preform having the number of vents comprises:
forming (1406) the plurality of plies (203) including the plurality of sets of full length plies (204) and the plurality of sets of partial plies (206), the plurality of sets of partial plies (206) comprising a number of vent holes (214); and
laying up (1408) the plurality of plies (203) on a tool (212) to form the preform (200), the number of vent holes (214) stacked vertically to form the number of vents (209) in the preform (200), preferably wherein (1410) laying up the plurality of plies (203) comprises alternating sets of partial plies and sets of full length plies.

12. The method (1400) of claim 10 or 11, wherein forming the preform having the number of vents comprises:
forming (1412) the plurality of plies (203) including the plurality of sets of full length plies (204) and the plurality of sets of partial plies (206);
laying up (1414) the plurality of plies (203) on a tool (212) to form the preform (200); and
cutting (1416) the number of vents (209) into the preform (200) through the plurality of sets of partial plies (206) and at least one full length ply of the plurality of sets of full length plies (204), and/or
pressing (1418) a plurality of pins through the plurality of sets of partial plies (206) to form the number of vents (209).

13. The method (1400) of any one of claims 10-12, wherein:
the number of vents (209) extends through an entirety of the preform (200); and/or
the number of vents (209) extends partially through the preform (200).

14. The method (1400) of any one of claims 10-13, further comprising:
positioning (1426) a release film (232) over the preform (200) prior to performing the debulk (228), the release film (232) comprising a number of perforations (239) adjacent the number of vents (209); and/or:
positioning (1424) a plug (226) into a vent (208) of the number of vents (209) prior to performing debulk (228); and/or:
curing (230) (1420) the preform (200) to form a laminate, and
cutting (1422) the number of vents (209) out of the laminate.

15. A method (1500) of forming a composite structure, the method comprising:
applying (1502) vacuum to a preform (200) having a vent (208) and a plurality of sets of partial plies (206), the vent (208) extending through the plurality of sets of partial plies (206); and
drawing (1504) at least one of air, volatiles, or resin out of the plurality of sets of partial plies (206) through the vent and into a breather.
